# DEMANDE DE BREVET EUROPEEN

(11) **EP 1 826 538 A1**
(43) Date de publication de la demande: **29.08.2007**
(21) Numéro de dépôt: 07290153.1
(22) Date de dépôt: 07.02.2007
(51) Int. Cl.: G01F 15/18, F16L 3/12, E03B 7/07

(54) **Installation comprenant une enceinte contenant un appareillage raccordé à deux tuyaux flexibles, et son procédé de montage**

(30) Priorité: 22.02.2006 FR 0601538
(71) Demandeur: MANUFACTURE D'APPAREILLAGE ELECTRIQUE DE CAHORS, 46000 Cahors (FR)
(72) Inventeur: Hahusseau, Philippe, 46000 Cahors (FR); Charles, Jérôme, 46000 Cahors (FR)
(74) Mandataire: Keib, Gérard

(57) **Abrégé**

Installation comprenant une enceinte (1) destinée à contenir un appareillage raccordé à deux tuyaux flexibles (2, 3), cette enceinte (1) comportant, à l'une de ses extrémités, un organe formant pied (4) destiné à prendre appui sur le sol et à maintenir l'enceinte (1) dans une position verticale, cet organe formant pied (4) comportant un passage de maintien pour chacun des deux tuyaux flexibles (2, 3) servant à guider l'une des parties de chaque tuyau flexible (2, 3) dans une direction sensiblement perpendiculaire à une partie du tuyau flexible raccordée audit appareil, caractérisée en ce que l'organe formant pied est constitué par au moins deux éléments distincts (5, 6) comportant chacun un passage (7, 8) pour maintenir l'un des deux tuyaux (2, 3), et l'un au moins de ces éléments étant monté de façon amovible et orientable par rapport à l'autre élément sur un bord (9) de l'extrémité de l'enceinte (1).

## Description

La présente invention concerne une installation, comportant une enceinte destinée à contenir un appareillage raccordé à deux tuyaux flexibles.

Par appareillage, on entend tout type d'appareil, dispositif, ou ensemble de composants susceptibles d'être raccordés à un tuyau d'arrivée et un tuyau de départ d'eau.

L'enceinte est notamment destinée à contenir un compteur d'eau et peut constituer un regard enterré ou être disposée en façade d'une maison ou d'un immeuble.

Dans cette application, le tuyau flexible d'arrivée d'eau est destiné à être relié au réseau de distribution d'eau, tandis que le tuyau flexible de départ est destiné à être relié à l'abonné. Il s'agit, dans ce cas, d'une borne de comptage d'eau.

Dans une réalisation connue, l'enceinte de la borne de comptage d'eau comporte, à son extrémité inférieure, un organe formant pied destiné à prendre appui sur le sol et à maintenir l'enceinte dans une position verticale.

Cet organe formant pied comporte deux embouts opposés comportant chacun un passage pour l'un des deux tuyaux flexibles, servant à guider l'une des parties de chaque tuyau flexible dans une direction sensiblement perpendiculaire à une partie du tuyau flexible raccordée au compteur d'eau qui s'étend sensiblement verticalement à l'intérieur de l'enceinte.

Dans cette réalisation, avant leur montage dans l'enceinte, chaque tuyau est coudé en usine par chauffage de la matière thermoplastique du tuyau pour permettre son insertion dans l'enceinte de la borne et sa fixation dans l'embout correspondant de l'organe formant pied.

Dans une autre réalisation connue, les tuyaux ne sont pas coudés en usine, mais pliés du fait de leur flexibilité lors de leur montage, l'organe formant pied comportant des moyens de fixation permettant de maintenir l'extrémité pliée de chacun des deux tuyaux flexibles.

Dans les deux réalisations connues, les deux extrémités des tuyaux faisant saillie de l'enceinte de la borne, s'étendent dans des directions opposées fixes, situées par conséquent à 180° l'une de l'autre.

La demanderesse a constaté qu'il existait un besoin de créer une installation, en particulier une borne de comptage d'eau dans laquelle les deux tuyaux peuvent faire saillie de l'organe formant pied, dans des directions différentes de 180°.

Le but de la présente invention est de satisfaire un tel besoin.

Suivant l'invention, l'installation du type connu décrit plus haut, est caractérisée en ce que l'organe formant pied est constitué par au moins deux éléments distincts, comportant chacun un passage pour maintenir l'un des deux tuyaux, et l'un au moins de ces éléments étant monté de façon amovible et orientable par rapport à l'autre élément sur un bord de l'extrémité de l'enceinte.

On peut ainsi orienter les deux tuyaux flexibles dans des directions différentes de 180° ou égales à 180° suivant les besoins.

Dans une application préférée de l'invention, l'installation est constituée par une borne de comptage d'eau et ledit appareillage est un compteur d'eau.

De préférence, les deux éléments sont montés de façon amovible et orientable sur ledit bord de l'enceinte.

De préférence, ledit bord de l'enceinte est circulaire, le ou lesdits éléments pouvant coulisser sur ledit bord circulaire.

Selon une version préférée de l'invention, chaque passage des éléments comporte une gorge de section en U apte à loger le tuyau flexible, un moyen de fixation mobile étant prévu pour maintenir le tuyau dans cette gorge.

Dans une réalisation particulière de l'invention, ledit moyen de fixation est une clavette engagée de façon coulissante dans deux ouvertures opposées, situées sur les bords respectifs de la gorge définie par chaque passage.

Après montage du tuyau dans la gorge, et coulissement de la clavette au-dessus du tuyau, ce dernier est parfaitement maintenu dans la gorge.

De préférence, le fond de chaque gorge présente une courbure adaptée à la courbure du tuyau qui relie les deux parties sensiblement perpendiculaires de chaque tuyau.

Dans une version avantageuse de l'invention, chacun des éléments formant pied a sensiblement la forme d'une équerre, l'une des branches de l'équerre comportant ladite gorge pour maintenir le tuyau, et l'autre branche comportant une fente annulaire dont le rayon correspond à celui du bord circulaire de l'enceinte pour pouvoir s'engager sur ce bord d'une manière orientable.

Selon d'autres particularités de l'invention,
- chacun des éléments formant pied comporte des moyens de fixation amovibles permettant de le fixer audit bord circulaire de l'enceinte,
- lesdits moyens de fixation comprennent une vis vissée dans la branche de l'élément en forme d'équerre comportant ladite fente annulaire, l'extrémité de cette vis pouvant venir en prise avec la paroi de l'enceinte engagée dans la fente annulaire,
- la borne comporte un troisième élément formant pied pouvant être monté de façon amovible et orientable par rapport aux deux autres éléments sur le bord circulaire de l'enceinte,
- ce troisième élément formant pied peut être dépourvu de passage pour un tuyau.

Selon un autre aspect de l'invention, le procédé de montage des deux tuyaux flexibles dans une installation selon l'invention dans lequel les deux tuyaux flexibles sont préalablement raccordés à un appareillage fixé à l'intérieur de l'enceinte, et font saillie de l'une des extrémités de cette enceinte, est caractérisé par les étapes suivantes :
- on monte chacun des deux éléments formant pied sur le bord circulaire de ladite extrémité de l'enceinte,
- on oriente chacun des éléments par rapport à l'autre élément en fonction de l'orientation désirée pour les tuyaux,
- on fixe les éléments à l'enceinte,
- on plie la partie saillante de chaque tuyau pour l'engager dans le passage prévu sur l'élément correspondant et,
- on fixe chaque tuyau dans ledit passage.

Lorsque les deux éléments formant pied sont orientés l'un par rapport à l'autre suivant un angle différent de 180°, on fixe, sur le bord circulaire de l'enceinte, un troisième élément formant pied de façon que celui-ci soit orienté sensiblement à l'opposé de la bissectrice de l'angle compris entre les deux autres éléments.

Le troisième pied permet ainsi de conférer une excellente stabilité à l'ensemble de la borne de comptage d'eau selon l'invention.

D'autres particularités et avantages de l'invention apparaîtront encore dans la description ci-après.

Aux dessins annexés, donnés à titre d'exemples non limitatifs :
- la figure 1 est une vue d'ensemble d'une borne de comptage d'eau selon l'invention,
- la figure 2 est une vue en perspective partielle et agrandie de la borne de comptage, en position inversée, montrant les éléments formant pied et les deux tuyaux flexibles maintenus dans ces éléments,
- la figure 3 est une autre vue encore plus agrandie, montrant notamment l'un des éléments formant pied,
- la figure 4 est une vue en coupe suivant le plan de symétrie de l'élément formant pied de la figure 3.

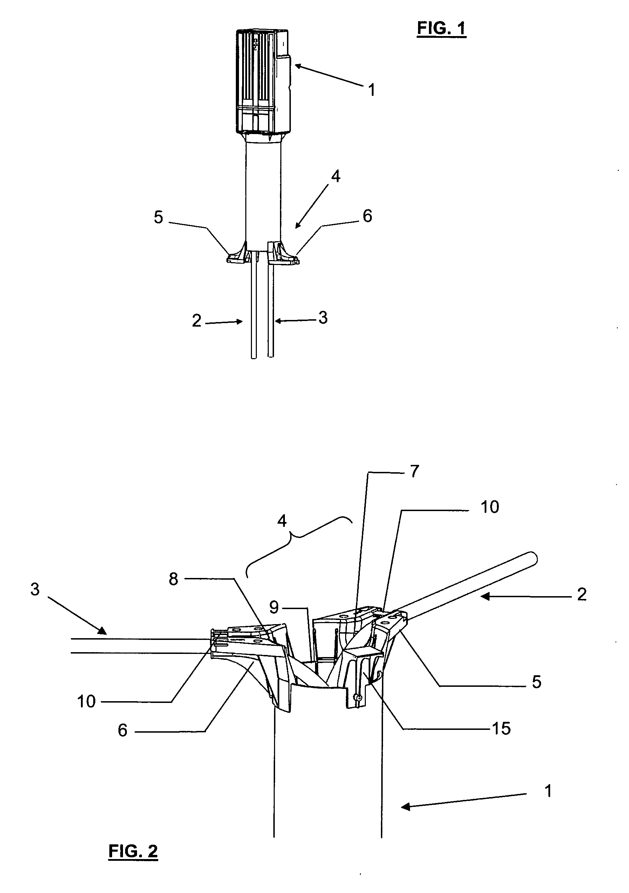

La figure 1 représente une borne de comptage d'eau, comprenant une enceinte 1 destinée à contenir un compteur d'eau (non représenté) raccordé à un tuyau flexible d'arrivée d'eau 2, et un tuyau flexible de départ d'eau 3. Cette enceinte 1 comporte, à l'une de ses extrémités, un organe 4 formant pied destiné à prendre appui sur le sol et à maintenir l'enceinte 1 dans une position verticale. Cet organe formant pied 4 comporte un passage de maintien pour chacun des deux tuyaux flexibles 2, 3 servant à guider l'une des parties de chaque tuyau flexibles 2, 3 dans une direction sensiblement perpendiculaire à une partie verticale du tuyau flexible raccordée au compteur d'eau.

Dans cet exemple, l'organe formant pied 4 est constitué par au moins deux éléments distincts 5, 6 comportant chacun (voir figure 2, 3, 4) un passage 7, 8 pour maintenir l'un des deux tuyaux 2, 3, et étant chacun monté de façon amovible et orientable par rapport à l'autre élément sur un bord circulaire 9 de l'extrémité de l'enceinte 1.

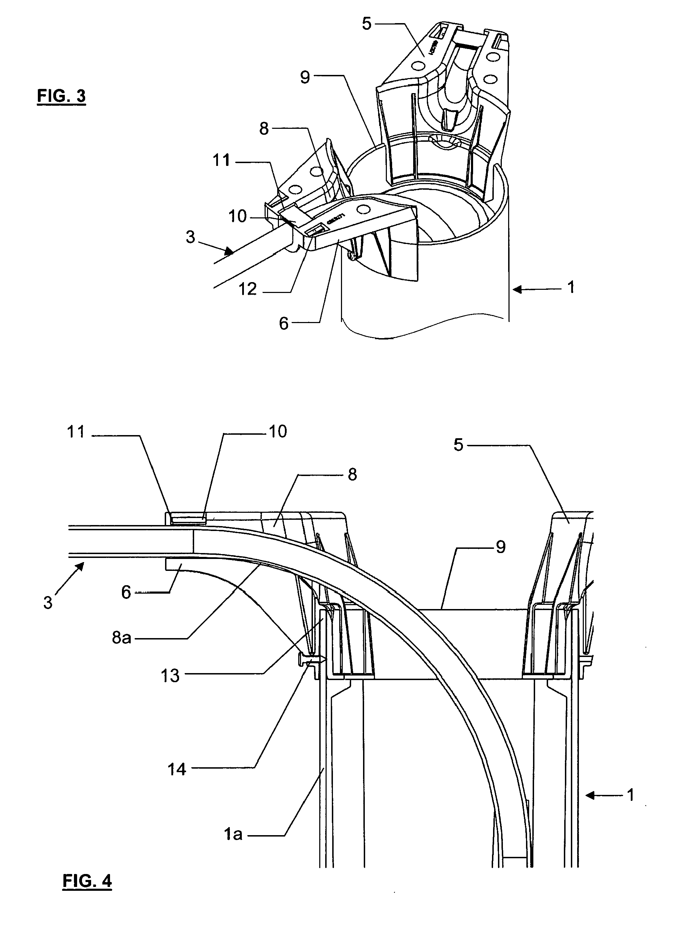

Chaque passage 7, 8 de l'un des éléments 5, 6 comporte (voir figure 2, 3) une gorge de section en U apte à loger le tuyau flexible 2, 3, un moyen de fixation mobile étant prévu pour maintenir le tuyau dans cette gorge.

Comme on le voit plus en détail sur la figure 3, le moyen de fixation est une clavette 10 engagée de façon coulissante dans deux ouvertures opposées 11, 12 situées sur les bords respectifs de la gorge définie par le passage 7 ou 8. Cette clavette 10 s'étend au-dessus du tuyau 3 ou 2 et le maintient en appui au fond de la gorge.

La figure 4 montre, d'autre part, que le fond 8a de chaque gorge présente une courbure adaptée à la courbure du tuyau 3 qui relie les deux parties sensiblement perpendiculaires l'une à l'autre de chaque tuyau 3 ou 2.

Par ailleurs, chacun des éléments 5, 6 formant pied a sensiblement la forme d'une équerre, la branche horizontale de l'équerre comportant la gorge 7 ou 8 pour maintenir le tuyau 2 ou 3 , et l'autre branche verticale comportant (voir figure 4) une fente annulaire 13 dont le rayon correspond à celui du bord circulaire 9 de l'enceinte 1 pour pouvoir s'engager sur le bord 9 d'une manière coulissante et orientable.

D'autre part, chacun des éléments 5, 6 formant pied, comporte des moyens de fixation amovibles permettant de le fixer au bord circulaire de l'enceinte 1.

Dans l'exemple représenté, ces moyens de fixation comprennent (voir notamment la figure 4) une vis 14 vissée dans la branche verticale de l'élément 6 ou 5 en forme d'équerre qui comporte la fente annulaire 13. L'extrémité de cette vis 14 est adaptée pour venir en prise avec la paroi latérale 1a de l'enceinte 1 engagée dans la fente annulaire 13.

Dans l'exemple représenté sur la figure 2, le bord circulaire 9 de l'enceinte 1 comporte un troisième élément formant pied 15 pouvant être monté de façon amovible et orientable par rapport aux deux autres éléments 5, 6.

Ce troisième élément formant pied 15 présente la même structure que les deux autres éléments, mais il est dépourvu de passage pour un tuyau 2 ou 3. Le troisième pied 15 permet d'améliorer la stabilité de la borne, notamment lorsque les éléments 5, 6 forment entre eux un angle différent de 180°.

Les éléments formant pied 5, 6 et 15 peuvent être moulés en matière plastique.

On va maintenant expliquer le montage du tuyau flexible 2 d'arrivée d'eau et du tuyau flexible 3 de départ d'eau dans la borne de comptage d'eau que l'on vient de décrire.

On supposera que les deux tuyaux flexibles 2, 3 sont préalablement raccordés à un compteur d'eau fixé à l'intérieur de l'enceinte 1, et font saillie de l'une des extrémités de cette enceinte 1, comme montré sur la figure 1.

On procède ensuite aux opérations suivantes :
- on monte chacun des deux éléments 5, 6 formant pied sur le bord circulaire 9 de l'extrémité de l'enceinte 1,
- on oriente chacun des éléments 5, 6 par rapport à l'autre élément en fonction de l'orientation désirée,
- on fixe les éléments 5, 6 à l'enceinte 1 au moyen d'une vis 14,
- on plie la partie saillante de chaque tuyau 2, 3 pour l'engager dans le passage 7, 8 prévu sur l'élément 5 ou 6 correspondant et,
- on fixe chaque tuyau 2, 3 dans le passage 7, 8 correspondant au moyen de la clavette 10.

Lorsque les deux éléments 5, 6 formant pied sont orientés l'un par rapport à l'autre suivant un angle différent de 180°, on fixe sur le bord circulaire 9 de l'enceinte 1, un troisième pied 15 de façon à ce que celui-ci soit orienté sensiblement à l'opposé de la bissectrice de l'angle compris entre les deux autres éléments 5, 6 comme montré sur la figure 2.

Bien entendu, l'invention n'est pas limitée à l'exemple que l'on vient de décrire.

Dans une version simplifiée de l'invention, il suffit que l'un des éléments 5, 6 soit mobile et orientable par rapport à l'autre élément.

Par ailleurs, le bord de l'enceinte 1 pourrait ne pas être circulaire, mais pourrait être polygonal (carré, pentagonal, hexagonal, etc...).

## Revendications

1. Installation comprenant une enceinte (1) destinée à contenir un appareillage raccordé à deux tuyaux flexibles, cette enceinte (1) comportant, à l'une de ses extrémités, un organe formant pied (4) destiné à prendre appui sur le sol et à maintenir l'enceinte (1) dans une position verticale, cet organe formant pied (4) comportant un passage de maintien pour chacun des deux tuyaux flexibles (2, 3) servant à guider l'une des parties de chaque tuyau flexible (2, 3) dans une direction sensiblement perpendiculaire à une partie du tuyau flexible raccordée audit appareil, **caractérisée en ce que** l'organe formant pied est constitué par au moins deux éléments distincts (5, 6) comportant chacun un passage (7, 8) pour maintenir l'un des deux tuyaux (2, 3), et l'un au moins de ces éléments étant monté de façon amovible et orientable par rapport à l'autre élément sur un bord (9) de l'extrémité de l'enceinte (1).

2. Installation selon la revendication 1, **caractérisée en ce qu'**elle est constituée par une borne de comptage d'eau et ledit appareillage est un compteur d'eau.

3. Installation selon l'une des revendications 1 ou 2, **caractérisée en ce que** les deux éléments (5, 6) sont montés de façon amovible et orientable sur ledit bord (9) de l'enceinte (1).

4. Installation selon l'une des revendications 1 à 3, **caractérisée en ce que** ledit bord (9) de l'enceinte est circulaire, le ou lesdits éléments (5, 6) pouvant coulisser sur ledit bord circulaire.

5. Installation selon l'une des revendications 1 à 4, **caractérisée en ce que** chaque passage (7, 8) des éléments (5, 6) comporte une gorge de section en U apte à loger le tuyau flexible (2, 3), un moyen de fixation mobile étant prévu pour maintenir le tuyau (2, 3) dans cette gorge.

6. Installation selon la revendication 5, **caractérisée en ce que** ledit moyen de fixation est une clavette (10) engagée de façon coulissante dans deux ouvertures opposées (11, 12) situées sur les bords respectifs de la gorge définie par chaque passage (7, 8).

7. Installation selon l'une des revendications 5 ou 6, **caractérisée en ce que** le fond (8a) de chaque gorge présente une courbure adaptée à la courbure du tuyau qui relie les deux parties sensiblement perpendiculaires de chaque tuyau (2, 3).

8. Installation selon l'une des revendications 5 à 7, **caractérisée en ce que** chacun des éléments (5, 6) formant pied a sensiblement la forme d'une équerre, l'une des branches de l'équerre comportant ladite gorge pour maintenir le tuyau (2, 3), et l'autre branche comportant une fente annulaire (13) dont le rayon correspond à celui du bord circulaire (9) de l'enceinte (1), pour pouvoir s'engager sur ce bord d'une manière coulissante et orientable.

9. Installation selon l'une des revendications 1 à 8, **caractérisée en ce que** chacun des éléments (5, 6) formant pied comporte des moyens de fixation amovibles permettant de le fixer audit bord (9) de l'enceinte (1).

10. Installation selon les revendications 8 et 9, **caractérisée en ce que** lesdits moyens de fixation comprennent une vis (14) vissée dans la branche de l'élément (6, 7) en forme d'équerre comportant ladite fente annulaire (13), l'extrémité de cette vis (14) pouvant venir en prise avec la paroi de l'enceinte (1) engagée dans la fente annulaire (13).

11. Installation selon l'une des revendications 1 à 10, **caractérisée en ce qu'**elle comporte un troisième élément (15) formant pied pouvant être monté de façon amovible et orientable par rapport aux deux autres éléments (6, 7) sur le bord (9) de l'enceinte (1).

12. Installation selon la revendication 11, **caractérisée en ce que** ledit troisième élément (15) formant pied est dépourvu de passage pour un tuyau (2, 3).

13. Procédé de montage de deux tuyaux flexibles (2, 3) dans une installation selon l'une des revendications 1 à 12, dans lequel les deux tuyaux flexibles (2, 3) sont préalablement raccordés à un appareillage fixé à l'intérieur de l'enceinte (1), et font saillie de l'une des extrémités de cette enceinte (1), **caractérisé par** les étapes suivantes :
- on monte chacun des deux éléments (5, 6) formant pied sur le bord (9) de ladite extrémité de l'enceinte (1),
- on oriente chacun des éléments (5, 6) par rapport à l'autre élément en fonction de l'orientation désirée pour les tuyaux (2, 3),
- on fixe les éléments (5, 6) à l'enceinte (1),
- on plie la partie saillante de chaque tuyau (2, 3) pour l'engager dans le passage (7, 8) prévu sur l'élément (5, 6) correspondant et,
- on fixe chaque tuyau (2, 3) dans ledit passage (7, 8).

14. Procédé de montage selon la revendication 13, **caractérisé en ce que** lorsque les deux éléments (5, 6) formant pied sont orientés, l'un par rapport à l'autre, suivant un angle différent de 180°, on fixe sur le bord (9) de l'enceinte (1) un troisième pied (15) de façon que celui-ci soit orienté sensiblement à l'opposé de la bissectrice de l'angle compris entre les deux autres éléments (5, 6).
